# EUROPÄISCHE PATENTSCHRIFT

(11) **EP 2 496 653 B1**
(45) Veröffentlichungstag und Bekanntmachung des Hinweises auf die Patenterteilung: **10.09.2014**
(21) Anmeldenummer: 10776571.1
(22) Anmeldetag: 28.10.2010
(51) Int. Cl.: C09D 183/04, B65D 85/76

(54) **VERPACKUNGSFOLIE**
PACKAGING FILM
FEUILLE D'EMBALLAGE

(30) Priorität: 05.11.2009 CH 17082009
(43) Veröffentlichungstag der Anmeldung: 12.09.2012
(73) Patentinhaber: Amcor Flexibles Kreuzlingen Ltd., 8280 Kreuzlingen (CH)
(72) Erfinder: KOBLISCHEK, Alfred, 77966 Kappel-Grafenhausen (DE); BONABEZE, Eric, F-68000 Colmar (FR)
(74) Vertreter: Gernet, Samuel Andreas
(86) Internationale Anmeldenummer: PCT/EP2010/006583
(87) Internationale Veröffentlichungsnummer: WO 2011/054476

(56) Entgegenhaltungen:
- EP-A2- 1 288 245
- DE-A1- 10 036 434
- DE-A1- 19 647 368
- DE-A1-102004 001 097

## Beschreibung

Die Erfindung betrifft eine Verpackungsfolie, mit einer Aluminiumfolie als Trägermaterial und einer auf wenigstens einer Seite der Aluminiumfolie angeordneten Korrosionsschutzschicht.

Zur Verpackung von kleinen Portionen Weich- oder Schmelzkäse in der Form von Würfeln Dreiecken, Tetraedern und anderen, für die Verpackung kleiner Massen geeigneten Designs, wie sie etwa als Häppchen bei einem Apero serviert werden, sind Folienverpackungen aus beschichteten Aluminiumfolien bekannt. Der Käse wird auf einer Abpackmaschine in schmelzflüssigem oder pastösem Zustand portionenweise in aus einer Behälterfolie geformte, oben offene Behälter gefüllt. Nach dem Auflegen von aus einer Deckelfolie geschnittenen Deckeln auf das Füllgut in den offenen Behäitem erfolgt ein dichtes Verschliessen durch eine Heisssiegelung der Deckel gegen die Behälter entlang eines umlaufenden Streifens des nach innen gegen den Deckel umgelegten Behälterrandes.

Bisher wurden die für Folienverpackungen der vorstehend erwähnten Art verwendeten Aluminiumfolien zum Schutz gegen Korrosion und zur Verbesserung der Haftung von Siegellacken mit einem Grundlack oder Primer lackiert. Damit lässt sich jedoch eine optisch störende Oberflächenkorrosion der Aluminiumfolie infolge Migration korrosiv wirkender Bestandteile der Käsemasse durch die Lackschichten nicht in jedem Fall vermeiden. Im Extremfall kann die Korrosion bis zum Lochfrass führen und so den Verderb des Lebensmittels durch Austrocknen oder mikrobiologischen Befall (Schimmel) bewirken.

WO 2009/068208 A1 offenbart eine Folienverpackung der vorstehend erwähnten Art mit einer Korrosionsschutzschicht aus einem Polymer, insbesondere aus einem Polyethylen, einem Polypropylen oder einem lonomer. Die Aluminiumfolie kann einseitig vorlackiert und ggf. bedruckt und überlackiert sein. Die Korrosionsschutzschicht ist in der Verpackung auf der gegen das Füllgut weisenden Seite der Aluminiumfolie angeordnet und beispielsweise als Siegelseite mit Heisssiegellack beschichtet. Um einen optimalen Korrosionsschutz zu erzielen, muss die Korrosionsschutzschicht verhältnismässig dick aufgetragen werden, was mit einem entsprechend hohen Kostenaufwand verbunden ist.

Die für die vorstehend beschriebenen, zur Verpackung von Weich- oder Schmelzkäse eingesetzten Aluminiumfolien notwendigen Korrosionsschutzmassnahmen gelten auch für andere Einsatzbereiche, beispielsweise für die zur Verpackung von Molkereiprodukten verwendeten Folien zur Herstellung der zum Verschliessen von Behältern, wie z. B. Joghurtbechern, vorgesehenen Deckel.

Bekannte Korrosionsschutzmassnahmen für Aluminium sind das Eloxieren von Bändern und Blechen, was zu einer starken Erhöhung der Oxidschichtdicke führt, spezielle Lacksysteme, z. B. auf der Basis von Polyvinylidenfluorid (PVDF), und die Erhöhung der Lackschichtdicke.

Der Erfindung liegt die Aufgabe zugrunde, eine Verpackungsfolie der eingangs genannten Art zu schaffen, bei der die Aluminiumfolie mit möglichst geringem Materialauftrag wirksam gegen Korrosion geschützt ist und eine gute Haftung gegen die Aluminiumfolie und gegenüber Heisssiegellacken aufweist.

Zur erfindungsgemässen Lösung der Aufgabe führt, dass die Korrosionsschutzschicht eine Schicht aus einem Silizium(Si)-haltigen Lack umfasst.

Der wesentliche Vorteil des Si-haltigen Lacks gegenüber einem herkömmlichen Primer auf Lackbasis liegt darin, dass sehr dünne Filme hergestellt werden können, die sich durch eine hohe mechanische Stabilität auszeichnen und die darunter liegende Aluminiumfolie wirksam gegen Korrosion schützen. Daneben bildet die dünne, Si-haltige Lackschicht auf der Aluminiumfolie einen ausgezeichneten Haftgrund für Heisssiegelschichten.

Die erfindungsgemässe Beschichtung führt gerade auch bei Deckelfolien zum Verschliessen von Bechern zu wesentlichen Vorteilen, indem durch den Einsatz des Si-haltigen Lacksystems Beschichtungsmaterial und damit Kosten gespart werden können. Hinzu kommt, dass eine vollflächige Heisssiegellackbeschichtung durch eine partielle, ringförmige Beschichtung ersetzt werden kann. Durch partiellen Heisssiegellackauftrag kann im Tiefdruck inline gefertigt werden, wodurch sich ein Arbeitgang einsparen lässt. Weitere Einsparungen ergeben sich beim Heisssiegellack, bei der Trocknungskapazität und bei der Entsorgung von Lösemittel.

Die erfindungsgemässe Verpackungsfolie kann mehrschichtig aufgebaut sein. Die Aluminiumfolie kann z. B. einseitig vorlackiert und ggf. bedruckt und überlackiert sein. Die auf der anderen Seite auf der Aluminiumfolie angeordnete Korrosionsschutzschicht kann beispielsweise mit einer Heisssiegelschicht beschichtet sein.

Die Aluminiumfolie der Verpackungsfolie ist bevorzugt mit einem Flächengewicht von höchstens 1 g/m², vorzugsweise 0,1 bis 1 g/m² und insbesondere 0,4 bis 1 g/ m², mit dem Si-haltigen Lack beschichtet. Die hier angegebenen Flächengewichte beziehen sich auf die Beschichtung mit dem Si-haltigen Lack in getrocknetem bzw. ausgehärtetem Zustand.

Die erfindungsgemässe Verpackungsfolie eignet sich insbesondere zur Verpackung von Molkereiprodukten aller Art, insbesondere auch Weich- bzw. Schmelzkäse. Weiter ist die erfindungsgemässe Verpackungsfolie geeignet als Deckelmaterial für Behälter bzw. Becher mit flüssigen oder teilflüssigen Nahrungsmitteln, wie z. B. Jogurt.

Die Dicke der Aluminiumfolie der Verpackungsfolie liegt je nach Verwendungszweck zwischen etwa 5 und 100 µm. Zum Verpacken von Weich- bzw. Schmelzkäse beträgt die Dicke der Aluminiumfolie bevorzugt etwa 5 bis 15 µm, insbesondere 6 bis 12 µm. Für Deckel von Jogurtbechem beträgt die Dicke der Aluminiumfolie bevorzugt etwa 20 bis 60 µm, insbesondere 20 bis 40 µm.

Silizium-basierte Lackierungen allgemein bieten für Aluminium einen sehr guten Korrosionsschutz. Beispiele hierfür sind Wasserglas (Na₂SiO₃ bzw. K₂SiO₃), Silane, Siloxane und Ormocere. Durch geeignete Wahl der -Si(OR)-Gruppierungen ist eine optimale Haftung zur Aluminiumoberfläche zu realisieren. Wasserglas selbst wurde in der Vergangenheit häufig als Kaschiermedium für Aluminium/Papier-Verbunde eingesetzt. Durch geeignete Rezeptierung kann aus Wasserglas eine gut haftende und korrosionshemmende Lackierung realisiert werden, Analog können Silane, wie z. B. "Glymo", VTMO (Vinyltrimethoxysilan) und ETMO (Ethyltrimethoxysilan) als Lacke formuliert werden.

Bei den Korrosionsschutzschichten sind Polarisationen bzw. Hemmungen der kathodischen oder anodischen Teilreaktionen wichtig. Lacke hemmen -- mit Ausnahme von Fehlstellen/Poren - flächendeckend die anodische Teilreaktion d.h. die Metallauflösung durch lonentransport, sind aber meist nicht in der Lage, z.B. wegen Sauerstoff- oder Protonendurchlässigkeit die Kathodenreaktion zu inhibieren. Bei den Si-basierenden Lacken sind offenbar kathodisch aktive Zentren blockiert, was gibt insgesamt einen guten Korrosionsschutz ergibt.

Nachfolgend wird als Si-haltiger Lack beispielhaft ein Sol-Gel-Lack beschrieben. Der Sol-Gel-Lack ist bevorzugt ein aus einer alkoholischen Silan-Lösung, vorzugsweise einer Alkoxysilan-Lösung, und einer wässrigen kolloidalen Kieselsäure-Lösung hergestelltes Polysiloxan und besteht insbesondere aus vernetzten anorganischen Polysiloxanen mit über Kohlenstoffbindungen mit dem Silizium verbundenen organischen Gruppen, insbesondere Alkylgruppen. Polysiloxan ist dabei der Begriff für Polymere aus vernetzten Siloxanen.

Der auf die gegebenenfalls vorbehandelte Aluminiumfolie aufgetragene Sol-Gel-Lack ist bevorzugt ein aus einer alkoholischen Silan-Lösung, insbesondere einer Alkoxysilan-Lösung, und einer kolloidalen Kieselsäure-Lösung hergestelltes Polysiloxan. Das Polysiloxan wird insbesondere durch eine Kondensationsreaktion zwischen hydrolysierten und vemetzbaren Silanen, insbesondere Alkoxysilanen, und kolloidaler Kieselsäure erzeugt. Ein Teil der Siliziumatome kann durch andere Metall- oder Halbmetallatome, wie z. B. Al, Zr, Ge oder Sn; ersetzt sein.

Die Kondensationsreaktion zwischen hydrolisierten Silanen, insbesondere Alkoxysilanen, untereinander sowie hydrolisierten Silanen, insbesondere Alkoxysilanen, und kolloidaler Kieselsäure führt zur Ausbildung eines anorganischen Netzwerkes von Polysiloxanen. Gleichzeitig werden organische Gruppen, insbesondere Alkylgruppen bzw. einfache Alkylgruppen über Kohlenstoffbindungen in das anorganische Netzwerk eingebaut. Die organischen Gruppen, bzw. die Alkyl-Gruppen, nehmen jedoch nicht direkt an der Polymerisation bzw. der Vernetzung der Siloxane teil, sie dienen lediglich zur Funktionalisierung. Die Funktion liegt darin, dass die organischen Gruppen, insbesondere die AlkylGruppen, während des Sol-Gel-Prozesses an den Aussenseiten der Polysiloxane angehängt werden und dadurch eine gegen aussen wasserabstossende Lage ausbilden, welche dem Sol-Gel-Lack eine ausgeprägte hydrophobe Eigenschaft verleiht. Weiterhin dienen die organischen Gruppen dazu, die entsprechenden chemischen oder physikalischen Bindungen zur Al-Oberfläche einerseits, bzw. zur folgenden Heisssiegellackierung andererseits, herzustellen.

Der beschriebene Sol-Gel-Prozess führt, wie erwähnt, durch gezielte Hydrolyse und Kondensation von Alkoxiden des Siliziums und Kieselsäure zu einem Sol-Gel-Lack aus einem anorganischen Netzwerk mit eingebauten Alkylgruppen. Die dadurch erhaltenen Polysiloxane sind deshalb eher den anorganischen Polymeren einzuordnen.

Bei der Herstellung einer bevorzugten Ausführung eines Sol-Gel-Lackes als Schutzschicht wird zweckmässigerweise von zwei Basislösungen A und B ausgegangen.

Die Lösung A ist eine alkoholische Lösung eines oder mehrerer verschiedener Alkoxysilane, wobei die Alkoxysilane in einem wasserfreien Medium in nicht hydrolisierter Form vorliegen. Als Lösungsmittel wird zweckmässig ein Alkohol, wie beispielsweise Methyl-, Ethyl-, Propyl- oder Butylalkohol und bevorzugt Isopropylalkohol, verwendet.

Die Alkoxysilane werden durch die allgemeine Formel XₙSi(OR)₄₋ₙ beschrieben, in welcher "R" ein einfaches Alkyl ist, vorzugsweise aus der Gruppe umfassend Methyl, Ethyl, Propyl und Butyl. "X" ist zweckmässig ebenfalls ein Alkyl, vorzugsweise aus der Gruppe umfassend Methyl, Ethyl, Propyl und Butyl. Zweckmässige Alkoxysilane sind beispielsweise Tetramethoxysilane (TMOS) und bevorzugt Tetraethoxysilan (TEOS) und Methyltrimethoxysilan (MTMOS) und weitere Alkoxysilane.

In besonders bevorzugter Ausführungsform wird die Lösung A aus Tetraethoxysilan (TEOS) und/oder Methyltrimethoxysilan (MTMOS) mit einem Methyl-, Ethyl- oder Propyl-Alkohol und insbesondere mit einem Isopropylalkohol als Lösungsmittel zubereitet. Die Lösung A kann z.B. 25 - 35 Gew.-%, insbesondere 30 Gew.-%, TEOS und 15 - 25 Gew.-%, insbesondere 20 Gew.-%, MTMOS enthalten, beides gelöst in 40 - 60 Gew.-%, insbesondere 50 Gew.-%, Isopropylalkohol.

Die Lösung B enthält in Wasser gelöste kolloidale Kieselsäure. In zweckmässiger Ausführung wird die Lösung B mittels Säure, vorzugsweise mittels Salpetersäure (HNO₃) oder Essigsäure (CH₃COOH), auf einen pH-Wert zwischen 2,0 - 4, vorzugsweise zwischen 2,5 - 3,0 und insbesondere von 2,7 eingestellt.

Die verwendete Kieselsäure ist zweckmässig eine in saurem Milieu stabilisierte Kieselsäure, wobei der pH-Wert der Kieselsäure vorteilhaft bei 2 - 4 liegt. Die Kieselsäure ist vorteilhaft möglichst alkaliarm. Der Alkaligehalt (z.B. Na₂O) der Kieselsäure liegt bevorzugt unter 0,04 Gew.-%.

Die Lösung B enthält beispielsweise 70 - 80 Gew.-%, insbesondere 75 Gew.-%, Wasser als Lösungsmittel und 20 - 30 Gew.-%, insbesondere 25 Gew.-%, kolloidale Kieselsäure. Die Lösung B ist zweckmässig mittels Salpetersäure (HNO₃) oder Essigsäure (CH₃COOH) auf einen pH-Wert zwischen 2,0 - 3,5, vorzugsweise zwischen 2,5 - 3,0, und insbesondere von 2,7 eingestellt. Eine bevorzugte Kieselsäure-Lösung wird beispielsweise durch die Firma Nissan Chemical Industries Ltd. mit dem Produktname "SNOWTEX^{®} O" vertrieben.

Das Zusammenführen und Mischen der beiden Basislösungen A und B führt in Gegenwart der Salpetersäure oder Essigsäure zu einer Hydrolysereaktion zwischen dem in Lösung B enthaltenen Wasser und den in Lösung A enthaltenen Alkoxysilanen.

Hydrolysereaktion: Si(OR)ₙ + nH₂O → Si(OH)ₙ +nR(OH)

Gleichzeitig tritt eine Kondensationsreaktion ein, bei der unter Wasserabspaltung aus jeweils zwei Si-OH-Gruppen eine Siloxan-Bindung (Si-O-Si) aufgebaut wird. Durch fortschreitende Polymerisation entsteht dabei ein Netzwerk von Polysiloxanen, an welche Alkyl-Gruppen angegliedert sind. Die neue Mischlösung liegt in einem gelförmigen Zustand vor. Die beiden Lösungen A und B werden bevorzugt in einem Gewichtsverhältnis von 7 : 3 Teilen gemischt.

Der Sol-Gel-Lack wird zweckmässigerweise in Gel-Form auf die Oberfläche der in Bandform vorliegender Aluminiumfolie aufgetragen und anschliessend getrocknet bzw. gehärtet.

Die kontinuierliche Beschichtung zur Erzeugung der Korrosionsschutzschicht erfolgt bevorzugt im Bandlackierungsverfahren, auch Coil-Coating-Verfahren genannt. Ein typisches Coil-Coating-Verfahren ist ein Walzenauftragverfahren mit zwei oder drei Walzen.

Der Trocknungsprozess besteht darin, die im Sol-Gel-Lack verbleibenden Wasser und Alkohole auszutreiben, wodurch der Sol-Gel-Lack aushärtet und eine korrosionsfeste Schutzschicht auf der Folienoberfläche entsteht.

Das mit dem Sol-Gel-Lack beschichtete Folienband wird zweckmässigerweise mittels Strahlung, wie UV-Strahlung, Elektronenstrahlung oder Laserstrahlung getrocknet bzw. gehärtet. Auch mittels Wärmestrahlung, wie IR-Strahlung, oder mittels Konvektionserwärmung oder einer Kombination der vorgenannten Trocknungs- bzw. Härtungsverfahren, kann der Sol-Gel-Lack getrocknet bzw. gehärtet.

Die an der Bandoberfläche gemessene Temperatur zur Trockung bzw. Härtung des Sol-Gel-Lackes ist zweckmässig grösser als 60° C, vorzugsweise grösser als 150° C und insbesondere grösser als 180° C. Bei der Temperaturangabe handelt es sich um eine sogenannte "Peak Metal Temperature" (PMT).

Die erhöhte Temperatur kann beispielsweise während 5 Sekunden bis 2 Minuten auf das Band einwirken. Der Sol-Gel-Lack wird während einer Zeit von vorzugsweise weniger als 9 Sekunden, insbesondere von weniger als 6 Sekunden, und von vorzugsweise mehr als 5 Sekunden getrocknet bzw. gehärtet. Bei Einsatz von IR-Strahlung liegen die Trockungszeiten eher im unteren Bereich der angegebenen Aufenthaltszeiten.

Die Konvektionserwärmung kann zweckmässig durch eine Beaufschlagung mit erwärmten Gasen, wie Luft, Stickstoff, Edelgase oder Gemischen daraus, erfolgen. Die Sol-Gel-Lackschicht wird in einem Durchlaufofen getrocknet.

Die Sol-Gel-Schicht zeichnet sich zudem durch eine ausgezeichnete Haftung auf der Aluminiumfolie aus und eignet sich auch als Haftgrund für Heisssiegelschichten.

Nachfolgend wird anhand eines Beispiels die Zubereitung und Herstellung eines Sol-Gel-Lackes beschrieben. Dazu werden eine Lösung A und eine Lösung B vorbereitet.

Lösung A enthält:
50 Gew.-% Isopropylalkohol
30 Gew.-% Tetraethoxysilan (TEOS)
20 Gew.-% Methyltrimethoxysilan (MTMOS)

Lösung B enthält:
75 Gew.-% Wasser
25 Gew.-% Kolloidale Kieselsäure
Der pH-Wert der Lösung B ist unter Zugabe einer Säure, insbesondere Salpetersäure (HNO₃) oder Essigsäure (CH₃COOH), auf ca. 2,7 eingestellt.

Die Herstellung des Sol-Gel-Lackes und die Beschichtung der Aluminiumfolie erfolgt beispielsweise wie folgt:

Einer Basislösung A, wie zuvor beschrieben, in einem Anteil von 70 Gew.-% der Mischlösung wird unter Rühren eine Lösung B in einem Anteil von 30 Gew.-% der Mischlösung zugegeben. Die Lösungen A und B werden unter kontinuierlichem Rühren in eine Mischlösung überführt, wobei reaktionsbedingt Wärme freigesetzt wird.

Die Mischlösung wird über eine bestimmte Zeit, beispielsweise während 1 h bis 10 h, vorzugsweise währen 4 bis 8 h, insbesondere während rund 6 h gerührt.
Das Gemisch wird anschliessend filtriert. Der Filter dient dem Rückhalt grösserer Partikel, wie z.B. Partikel von kolloidaler Kieselsäure. Der Porendurchmesser bzw. die Maschenweite des Filters richtet sich nach der angestrebten Schichtdicke, da Partikel mit grösserem Durchmesser als die angestrebte Schichtdicke die Oberflächenqualität der Schutzschicht beeinträchtigen. Die Filtration kann beispielsweise mittels Polypropylenhlter mit einer Porosität von 1 µm erfolgen.

Die Mischlösung wird zweckmässig auf einem pH-Wert von 2 - 4, vorzugsweise von 2 bis 3,5, insbesondere von 2,5 bis 3, und besonders bevorzugt von 2,7, gehalten. Die Angleichung des pH-Wertes erfolgt mittels Säure, bevorzugt mittels Salpetersäure oder Essigsäure.

Nach Abschluss des Rührvorganges kann der Sol-Gel-Lack mittels eines der vorgenannten Verfahrens auf die Oberfläche der Aluminiumfolie aufgetragen und nachfolgend, wie vorgängig beschrieben, getrocknet bzw. gehärtet werden.

In vorteilhafter Ausführung des Herstellungsverfahrens wird der Sol-Gel-Lack nach seiner Herstellung und vor dem Auftrag auf die Bandoberfläche während weniger Minuten bis mehreren Stunden, vorzugsweise zwischen 1 und 24 h, insbesondere zwischen 12 und 22 h und besonders bevorzugt während rund 17 h ruhig gestellt.

Die Elementanalyse des ausgehärteten Sol-Gel-Lackes mittels XPS (X-Ray Photoelectron Spectroscopy) weist z.B. die Elemente Sauerstoff, Silizium und rund 5 - 20 at.% (Atomprozente) Kohlenstoff nach.

## Patentansprüche

1. Verpackungsfolie, mit einer Aluminiumfolie als Trägermaterial und einer auf wenigstens einer Seite der Aluminiumfolie angeordneten Korrosionsschutzschicht,
**dadurch gekennzeichnet, dass**
die Korrosionsschutzschicht eine Schicht aus einem Silizium (Si)-haltigen Lack umfasst, und die Korrosionsschutzschicht mit einer Heisssiegelschicht beschichtet ist.

2. Verpackungsfolie nach Anspruch 1, **dadurch gekennzeichnet, dass** die Aluminiumfolie mit einem Flächengewicht von höchstens 1 g/m², vorzugsweise 0,1 bis 1 g/m² und insbesondere 0,4 bis 1 g/ m², mit dem Si-haltigen Lack beschichtet ist.

3. Verpackungsfolie nach Anspruch 1 oder 2, **dadurch gekennzeichnet, dass** der Si-haltige Lack Wasserglas, Silane und/oder Siloxane enthält oder daraus besteht.

4. Verpackungsfolie nach einem der Ansprüche 1 bis 3, **dadurch gekennzeichnet, dass** der Si-haltige Lack ein Sol-Gel-Lack ist.

5. Verpackungsfolie nach Anspruch 4, **dadurch gekennzeichnet, dass** der Sol-Gel-Lack ein aus einer alkoholischen Silan-Lösung, vorzugsweise einer Alkoxysilan-Lösung, und einer wässrigen kolloidalen Kieselsäure-Lösung hergestelltes Polysiloxan ist.

6. Verpackungsfolie nach Anspruch 5, **dadurch gekennzeichnet, dass** der Sol-Gel-Lack aus vernetzten anorganischen Polysiloxanen mit über Kohlenstoffbindungen mit dem Silizium verbundenen organischen Gruppen, insbesondere Alkylgruppen, besteht.

7. Verwendung der Verpackungsfolie nach einem der vorangehenden Ansprüche zum Verpackung von Nahrungsmitteln, insbesondere Weich- bzw. Schmelzkäse und/oder als Deckelmaterial für Behälter bzw. Becher mit flüssigen oder teilflüssigen Nahrungsmitteln.

## Claims

1. Packaging film comprising an aluminium foil as the substrate and an anti-corrosion layer arranged on at least one side of the aluminium foil, **characterised in that** the anti-corrosion layer comprises a layer made of a silicon (Si)-containing lacquer, and the anti-corrosion layer is coated with a heat-sealing layer.

2. Packaging film according to claim 1, **characterised in that** the aluminium foil is coated with the Si-containing lacquer to a basis weight of at most 1 g/m², preferably of from 0.1 to 1 g/m², and in particular of from 0.4 to 1 g/m².

3. Packaging film according to either claim 1 or claim 2, **characterised in that** the Si-containing lacquer contains or consists of water glass, silanes and/or siloxanes.

4. Packaging film according to any of claims 1 to 3, **characterised in that** the Si-containing lacquer is a sol-gel lacquer.

5. Packaging film according to claim 4, **characterised in that** the sol-gel lacquer is a polysiloxane produced from an alcoholic silane solution, preferably an alkoxysilane solution, and an aqueous colloidal silicic acid solution.

6. Packaging film according to claim 5, **characterised in that** the sol-gel lacquer consists of cross-linked inorganic polysiloxanes having organic groups, in particular alkyl groups, connected to the silicon via carbon bonds.

7. Use of the packaging film according to any of the preceding claims for packaging foodstuffs, in particular soft or processed cheese and/or as a lid material for containers or pots containing liquid or semi-liquid foodstuffs.

## Revendications

1. Feuille d'emballage, avec une feuille d'aluminium comme matériau de support et une couche de protection à la corrosion disposée sur au moins un côté de la feuille d'aluminium,
**caractérisée en ce que**
la couche de protection à la corrosion comprend une couche constituée d'une laque contenant du silicium (Si), et la couche de protection à la corrosion est revêtue d'une couche thermosoudable.

2. Feuille d'emballage selon la revendication 1, **caractérisée en ce que** la feuille d'aluminium est revêtue avec une masse superficielle d'au plus 1 g/m², de préférence de 0,1 à 1 g/m² et en particulier de 0,4 à 1 g/m², avec la laque contenant Si.

3. Feuille d'emballage selon la revendication 1 ou 2, **caractérisée en ce que** la laque contenant Si contient du verre soluble, du silane et/ou du siloxane ou est constituée de ceux-ci.

4. Feuille d'emballage selon l'une quelconque des revendications 1 à 3, **caractérisée en ce que** la laque contenant Si est un sol-gel-laque.

5. Feuille d'emballage selon la revendication 4, **caractérisée en ce que** le sol-gel-laque est un polysiloxane préparé à partir d'une solution alcoolique de silane, de préférence d'une solution d'alcoxysilane, et d'une solution aqueuse colloïdale d'acide silicilique.

6. Feuille d'emballage selon la revendication 5, **caractérisée en ce que** le sol-gel-laque est constitué de polysiloxanes inorganiques réticulés avec des liaisons carbone avec des groupes organiques liés au silicium, en particulier des groupes alkyle.

7. Utilisation de la feuille d'emballage selon l'une quelconque des revendications précédentes pour l'emballage de produits alimentaires, en particulier de fromages à pâte molle respectivement fondus et/ou comme matériau de couvercle pour des récipients respectivement des bols avec des aliments liquides ou partiellement liquides.
